# EUROPÄISCHE PATENTANMELDUNG

(11) **EP 1 944 690 A2**
(43) Veröffentlichungstag der Anmeldung: **16.07.2008**
(21) Anmeldenummer: 07121589.1
(22) Anmeldetag: 27.11.2007
(51) Int. Cl.: G06F 9/445

(54) **Verfahren, Vorrichtung und System**

(30) Priorität: 19.12.2006 DE 102006060004
(71) Anmelder: Continental Automotive GmbH, 30165 Hannover (DE)
(72) Erfinder: Becker, Matthias, 35394 Giessen (DE); Göhring, Thomas, 36469 Tiefenort (DE); Knobl, Karl-Heinz, 35469 Allendorf (DE); Weymann, Bernd, 35619 Braunfels (DE)

(57) **Zusammenfassung**

Von mindestens zwei vorgegebenen Komponenten eines Systems ist mindestens eine als eine Erstkomponente (EK) vorgegeben, die nach dem Beginn einer Startphase des Systems als erstes genutzt werden soll. Mindestens eine der mindestens zwei vorgegebenen Komponenten ist als eine weitere Komponente (WK) vorgegeben. Mindestens ein Arbeitsprogramm (AP), das der mindestens einen Erstkomponente (EK) zugeordnet ist und das abgearbeitet sein muss, bevor die mindestens eine Erstkomponente (EK) nutzbar ist, wird mit einer ersten Lastpriorität abgearbeitet. Mindestens ein Arbeitsprogramm (AP), das der mindestens einen weiteren Komponente (WK) zugeordnet ist und das abgearbeitet sein muss, bevor die mindestens eine weitere Komponente (WK) nutzbar ist, wird mit einer zweiten Lastpriorität abgearbeitet, die niedriger ist als die erste Lastpriorität. Das mindestens eine Arbeitsprogramm (AP), das der mindestens einen Erstkomponente (EK) zugeordnet ist, wird vor dem mindestens einen Arbeitsprogramm (AP) abgearbeitet, das der mindestens einen weiteren Komponente (WK) zugeordnet ist.

## Beschreibung

Die Erfindung betrifft ein Verfahren, eine entsprechende Vorrichtung und ein entsprechendes System. Die Erfindung betrifft insbesondere ein Multimediasystem für ein Kraftfahrzeug, das die Vorrichtung als eine Steuereinheit und mehrere vorgegebene Komponenten umfasst, die durch einen Nutzer auswählbar und startbar sind.

Solche vorgegebenen Komponenten sind beispielsweise eine Radioeinheit, eine CD-Wiedergabeeinheit, eine Telefoneinheit oder eine Navigationseinheit. Die vorgegebenen Komponenten eines solchen Multimediasystems sind über eine gemeinsame Benutzerschnittstelle auswählbar und startbar.

Die Aufgabe der Erfindung ist, ein Verfahren, eine Vorrichtung und ein System zu schaffen zum Ermöglichen eines verzögerungsarmen Startens von vorgegebenen Komponenten des Systems.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren, eine entsprechende Vorrichtung und ein entsprechendes System. Von mindestens zwei vorgegebenen Komponenten des Systems ist mindestens eine als eine Erstkomponente vorgegeben, die nach dem Beginn einer Startphase des Systems als erstes genutzt werden soll. Mindestens eine der mindestens zwei vorgegebenen Komponenten ist als eine weitere Komponente vorgegeben. Mindestens ein Arbeitsprogramm, das der mindestens einen Erstkomponente zugeordnet ist und das abgearbeitet sein muss, bevor die mindestens eine Erstkomponente nutzbar ist, wird mit einer ersten Lastpriorität abgearbeitet. Mindestens ein Arbeitsprogramm, das der mindestens einen weiteren Komponente zugeordnet ist und das abgearbeitet sein muss, bevor die mindestens eine weitere Komponente nutzbar ist, wird mit einer zweiten Lastpriorität abgearbeitet, die niedriger ist als die erste Lastpriorität. Das mindestens eine Arbeitsprogramm, das der Erstkomponente zugeordnet ist, wird vor dem mindestens einen Arbeitsprogramm abgearbeitet, das der mindestens einen weiteren Komponente zugeordnet ist.

Arbeitsprogramme, die den vorgegebenen Komponenten des Systems zugeordnet sind, werden üblicherweise entweder alle während einer Startphase des Systems abgearbeitet oder erst dann abgearbeitet, wenn die jeweilige vorgegebene Komponente genutzt werden soll, das heißt diese ausgewählt und gestartet wird. Dies führt jedoch dazu, dass entweder aufgrund der abzuarbeitenden Arbeitsprogramme aller vorgegebenen Komponenten die Startphase des Systems besonders lange dauert oder das Nutzen der jeweiligen vorgegebenen Komponente dadurch verzögert wird, dass erst die dieser zugeordneten Arbeitsprogramme abgearbeitet werden müssen.

Die Erfindung beruht auf der Erkenntnis, dass eine Rechenlast während der Startphase des Systems im Allgemeinen besonders hoch ist und im Allgemeinen nur eine oder wenige der potentiell nutzbaren vorgegebenen Komponenten tatsächlich zeitnah zu dem Beginn der Startphase genutzt werden sollen. Insbesondere soll besonders häufig die vor der aktuellen Startphase des Systems zuletzt genutzte vorgegebene Komponente nach dem Neustart des Systems als erstes wieder genutzt werden. Diese vorgegebene Komponente kann beispielsweise als die Erstkomponente vorgegeben werden. Durch das Abarbeiten der Arbeitsprogramme, die der mindestens einen Erstkomponente zugeordnet sind, mit der ersten Lastpriorität kann erreicht werden, dass die Erstkomponente besonders früh nach dem Beginn der Startphase des Systems nutzbar ist. Durch das Abarbeiten der Arbeitsprogramme, die den weiteren Komponenten zugeordnet sind, mit der zweiten Lastpriorität und durch die dadurch veränderte Verteilung der Rechenlast kann einerseits erreicht werden, dass die Vorrichtung beziehungsweise das System während der Startphase des Systems entlastet wird. Andererseits kann erreicht werden, dass dadurch, dass die Arbeitsprogramme, die den weiteren Komponenten zugeordnet sind, abgearbeitet werden bevor die jeweils zugehörige weitere Komponente genutzt werden soll, zu einem späteren Zeitpunkt nach der Startphase die jeweilige weitere Komponente nach deren Auswahl und Start mit nur geringer Verzögerung nutzbar ist. Die bereits im Voraus abgearbeiteten Arbeitsprogramme müssen dann nicht mehr abgearbeitet werden.

Der Begriff der Lastpriorität bezieht sich auf eine Aufteilung der Rechenressourcen eines Prozessors oder mehrerer Prozessoren zwischen verschiedenen, quasiparallel laufenden Prozessen. Die Arbeitsprogramme werden beispielsweise als solche Prozesse oder von solchen Prozessen abgearbeitet. Einem Arbeitsprogramm mit einer hohen Lastpriorität wird ein größerer Anteil der Rechenressourcen für dessen Abarbeitung zur Verfügung gestellt als einem Arbeitsprogramm mit einer niedrigen Lastpriorität. Die zweite Lastpriorität ist bevorzugt so niedrig, dass die Arbeitsprogramme im Wesentlichen nur dann abgearbeitet werden können, wenn der Prozessor, dem das jeweilige Arbeitsprogramm für die Abarbeitung zugeordnet ist, nicht vollständig ausgelastet ist. Durch Vorsehen von mehr als einem Prozessor für das Ausführen von Arbeitsprogrammen sind die insgesamt zur Verfügung stehenden Rechenressourcen einfach skalierbar. So können zum Beispiel zwei oder mehr Arbeitsprogramme parallel abgearbeitet werden.

Die mindestens zwei vorgegebenen Komponenten können Hardware-und/oder Softwarekomponenten sein. Solche vorgegebenen Komponenten sind beispielsweise eine Radioeinheit, eine MP3-Wiedergabeeinheit, eine CD-Wiedergabeeinheit, eine Fernseheinheit, eine Telefoneinheit oder eine Navigationseinheit in einem Fahrzeug. Es können jedoch auch andere vorgegebene Komponenten vorgegeben sein. Beispielsweise können als vorgegebene Komponenten alternativ oder zusätzlich auch in einem Netzwerk bereitgestellte Dienste vorgegeben sein.

In einer vorteilhaften Ausgestaltung ist die mindestens eine weitere Komponente anforderbar. Bei einer Anforderung wird das mindestens eine Arbeitsprogramm, das der angeforderten Komponente zugeordnet ist, vor den Arbeitsprogrammen abgearbeitet, die den gegebenenfalls verbleibenden weiteren Komponenten zugeordnet sind, mit einer dritten Lastpriorität, die höher ist als die zweite Lastpriorität, wenn das mindestens eine Arbeitsprogramm, das der angeforderten Komponente zugeordnet ist, nicht bereits abgearbeitet wurde.

Das Anfordern der mindestens einen weiteren Komponente umfasst beispielsweise das Auswählen und Starten der jeweiligen weiteren Komponente. Das Anfordern erfolgt zum Beispiel durch einen Nutzer der Vorrichtung beziehungsweise des Systems, kann jedoch auch durch die Vorrichtung beziehungsweise durch das System veranlasst sein. Beispielsweise kann die Telefoneinheit automatisch angefordert werden, wenn ein Telefonanruf eingeht.

Der Vorteil ist, dass die Arbeitsprogramme, die der angeforderten Komponente zugeordnet sind, mit hoher Lastpriorität und dadurch schnell abgearbeitet werden können. Dadurch ist die angeforderte Komponente auch dann mit nur geringer Verzögerung nutzbar, wenn die zugehörigen Arbeitsprogramme noch nicht abgearbeitet wurden.

In einer weiteren vorteilhaften Ausgestaltung ist die mindestens eine weitere Komponente anforderbar. Bei einer Anforderung wird die zweite Lastpriorität des mindestens einen Arbeitsprogramms, das der angeforderten Komponente zugeordnet ist, auf die dritte Lastpriorität erhöht, wenn dieses mindestens eine Arbeitsprogramm aktuell abgearbeitet wird.

Der Vorteil ist, dass die Arbeitsprogramme, die der angeforderten Komponente zugeordnet sind, mit hoher Lastpriorität und dadurch schnell abgearbeitet werden können. Dadurch ist die angeforderte Komponente auch dann mit nur geringer Verzögerung nutzbar, wenn die zugehörigen Arbeitsprogramme noch nicht abgearbeitet wurden, jedoch aktuell abgearbeitet werden.

Bevorzugt wird die zweite Lastpriorität auf das Niveau der ersten Lastpriorität erhöht, das heißt die dritte Lastpriorität ist etwa gleich der ersten Lastpriorität. Die dritte Lastpriorität kann jedoch auch höher oder niedriger sein als die erste Lastpriorität.

In einer weiteren vorteilhaften Ausgestaltung ist den Arbeitsprogrammen, die der mindestens einen weiteren Komponente zugeordnet sind, jeweils eine Abarbeitungspriorität vorgebbar, die abhängig ist von einer tatsächlichen oder erwarteten Häufigkeit der Anforderung der jeweiligen weiteren Komponente.

Die Abarbeitungspriorität ist zum Beispiel durch eine Reihenfolge der Arbeitsprogramme vorgebbar, in der diese abgearbeitet werden. Arbeitsprogramme von häufig angeforderten weiteren Komponenten werden bevorzugt vor den Arbeitsprogrammen von weniger häufig angeforderten weiteren Komponenten abgearbeitet, so dass die Wahrscheinlichkeit hoch ist, dass bei der Anforderung einer der häufig angeforderten weiteren Komponenten die zugehörigen Arbeitsprogramme bereits abgearbeitet sind und die angeforderte Komponente mit geringer Verzögerung nutzbar ist.

In einer weiteren vorteilhaften Ausgestaltung umfassen die Arbeitsprogramme ein Laden einer Konfiguration der jeweiligen vorgegeben Komponente und/oder ein Überprüfen des Vorhandenseins oder der Verfügbarkeit und/oder eines Zustands der jeweiligen vorgegebenen Komponente.

Die Konfiguration umfasst zum Beispiel eine Information darüber, welcher Audio-Verstärker als Ausgabemedium genutzt werden soll, welche Lautstärkeeinstellungen möglich sind, oder welche Verbindungsparameter genutzt werden sollen, zum Beispiel für einen Aufbau einer Verbindung zu der vorgegebenen Komponente über ein Netzwerk. Der Zustand der jeweiligen Komponente umfasst zum Beispiel Informationen über aktuell verfügbare Sender, Titel oder Dienste oder den zuletzt genutzten Sender, Titel oder Dienst. Das Überprüfen des Vorhandenseins oder der Verfügbarkeit der jeweiligen vorgegebenen Komponente ist insbesondere von Bedeutung bei extern angeschlossenen vorgegebenen Komponenten, die gegebenenfalls nicht immer vorhanden oder verfügbar sind. Ferner kann jedoch auch überprüft werden, ob ein bestimmter Dienst vorhanden oder verfügbar ist, der in einem Netzwerk angeboten wird.

Ausführungsbeispiele der Erfindung sind im Folgenden anhand der schematischen Zeichnungen erläutert.

Es zeigen:
- Figur 1: ein System,
- Figur 2: ein Klassendiagramm,
- Figur 3: ein erstes Ablaufdiagramm,
- Figur 4: ein zweites Ablaufdiagramm,
- Figur 5: ein erstes Rechenlast-Zeit-Diagramm und
- Figur 6: ein zweites Rechenlast-Zeit-Diagramm.

Elemente gleicher Konstruktion oder Funktion sind figuren-übergreifend mit den gleichen Bezugszeichen versehen.

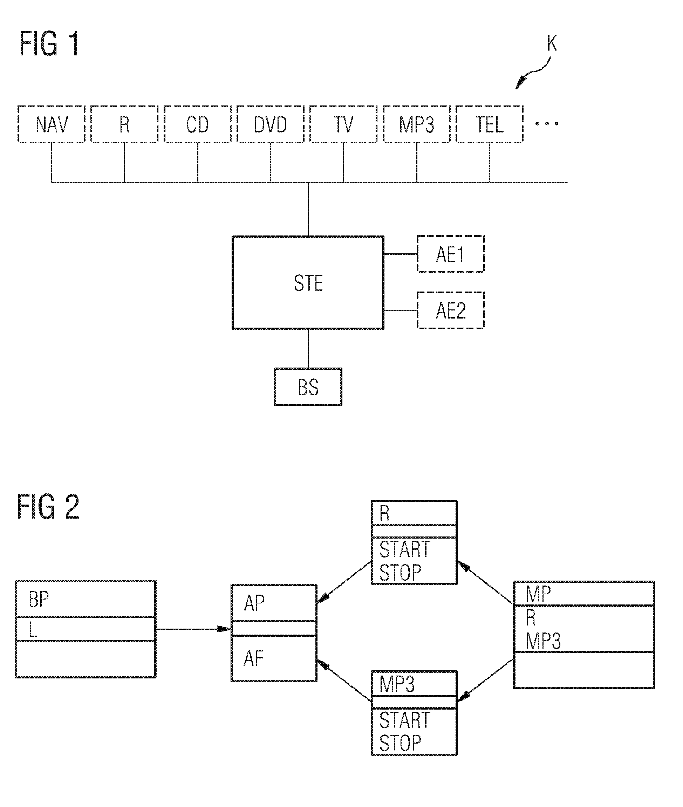

Ein System, insbesondere ein Multimediasystem für ein Fahrzeug, umfasst eine Steuereinheit STE, die eine Vorrichtung bildet und die mit einer Benutzerschnittstelle BS gekoppelt ist oder diese umfasst (Figur 1). Mit der Steuereinheit STE gekoppelt sind mindestens zwei vorgegebene Komponenten K. Die mindestens zwei vorgegebenen Komponenten K sind beispielsweise eine Navigationseinheit NAV, eine Radioeinheit R, eine CD-Wiedergabeeinheit CD, eine DVD-Wiedergabeeinheit DVD, eine Fernseheinheit TV, eine MP3-Wiedergabeeinheit MP3 oder eine Telefoneinheit TEL. Es können auch andere vorgegebene Komponenten K vorgesehen sein, zum Beispiel eine Kamera zur Unterstützung von Rückwärtsfahrten. Die vorgegebenen Komponenten K sind gemeinsam mit der Steuereinheit STE in einem Gehäuse angeordnet oder separat von der Steuereinheit STE ausgebildet. Die vorgegebenen Komponenten K sind beispielsweise über eine Kabelverbindung oder über eine Funkverbindung mit der Steuereinheit STE gekoppelt. Die vorgegebenen Komponenten K können auch ausgebildet sein, in einem Netzwerk, zum Beispiel WLAN oder Ethernet, ihre jeweiligen Dienste zur Verfügung zu stellen.

Ferner sind vorzugsweise eine erste Ausgabeeinheit AE1 und gegebenenfalls eine zweite Ausgabeeinheit AE2 vorgesehen. Es können jedoch auch weitere Ausgabeeinheiten vorgesehen sein. Die erste, die zweite und gegebenenfalls weitere Ausgabeeinheiten sind beispielsweise ein Lautsprechersystem oder eine Bildschirmeinheit. Die Steuereinheit STE ist ausgebildet, Ton- oder Bildausgaben der vorgegebenen Komponenten K an die jeweils geeigneten Ausgabeeinheiten weiterzuleiten oder eine direkte Zuführung der Ton- oder Bildausgaben der vorgegebenen Komponenten K an die jeweils geeigneten Ausgabeeinheiten zu ermöglichen. Die Steuereinheit STE kann ferner dazu ausgebildet sein, eine Zuordnung der jeweiligen vorgegebenen Komponente K zu einer oder mehreren Ausgabeeinheiten zu konfigurieren oder vorzugeben.

Im Allgemeinen müssen in dem System, das die mindestens zwei vorgegebenen Komponenten K aufweist, nicht alle vorgegebenen Komponenten K bereits in einer Startphase des Systems genutzt werden. Es kann zum Beispiel vorgegeben sein, dass jeweils die vor dem aktuellen Beginn der Startphase des Systems zuletzt genutzte vorgegebene Komponente K, zum Beispiel die Radioeinheit R, nach dem aktuellen Beginn der Startphase des Systems als erstes wieder genutzt werden soll. Diese im Folgenden als eine Erstkomponente EK bezeichnete vorgegebene Komponente K soll nach dem Start des Systems möglichst bald für deren Nutzung zur Verfügung stehen, das heißt das Radioprogramm ist zum Beispiel so bald wie möglich nach dem Beginn der Startphase des Systems hörbar. Es kann auch mehr als eine Erstkomponente EK vorgesehen sein.

Alle vorgegebenen Komponenten K, die nicht als Erstkomponenten EK vorgegeben sind, werden im Folgenden als weitere Komponenten WK bezeichnet. Die weiteren Komponenten WK sind zum Beispiel durch einen Nutzer nach dem Beginn der Startphase des Systems anforderbar, das heißt auswählbar und startbar. Das Nutzen der angeforderten weiteren Komponente WK, zum Beispiel der MP3-Wiedergabeeinheit MP3, soll jedoch idealerweise ohne spürbare Verzögerung möglich sein, das heißt eine Wartezeitdauer von der Anforderung der weiteren Komponente WK bis zu der Nutzbarkeit der weiteren Komponente WK soll möglichst kurz sein. Die Nutzbarkeit einer vorgegebenen Komponente K beginnt beispielsweise dann, wenn die Tonausgabe oder Bildausgabe dieser vorgegebenen Komponente K beginnt.

Um eine der mindestens zwei vorgegebenen Komponenten K nutzen zu können, muss im Allgemeinen mindestens ein Arbeitsprogramm AP abgearbeitet werden, das der jeweiligen vorgegebenen Komponente K zugeordnet ist. Ein solches Arbeitsprogramm AP umfasst beispielsweise ein Initialisieren oder ein Synchronisieren der jeweiligen Komponente K, das heißt alle vorbereitenden Arbeitsschritte, die für das Nutzen der jeweiligen vorgegebenen Komponente K erforderlich sind. Das Initialisieren umfasst beispielsweise ein Überprüfen, ob die jeweilige vorgegebene Komponente K physikalisch in dem System vorhanden und/oder verfügbar ist. Ferner umfasst die Initialisierung beispielsweise ein Laden einer Konfiguration. Diese Konfiguration umfasst beispielsweise Informationen zu der zu verwendenden Ausgabeeinheit und/oder einem möglichen Lautstärkebereich. Die Synchronisierung umfasst beispielsweise ein Bereitstellen einer Titel- oder Senderliste, zum Beispiel der in einen CD-Wechsler verfügbaren CDs mit ihren jeweiligen Titeln oder einer Liste der verfügbaren oder vorgegebenen Radiosender oder Fernsehsender.

Das Abarbeiten der Arbeitsprogramme AP erfordert Rechenressourcen, die insbesondere durch einen oder mehrere Prozessoren in der Steuereinheit STE bereitgestellt werden müssen. Jedoch ist während der Startphase des Systems eine Rechenlast RL besonders hoch.

Werden alle vorgegebenen Komponenten K während der Startphase des Systems initialisiert und synchronisiert, das heißt werden die Arbeitsprogramme AP, die den vorgegebenen Komponenten K zugeordnet sind, alle während der Startphase des Systems abgearbeitet, ist eine Zeitdauer von dem Beginn der Startphase des Systems bis zur Nutzbarkeit der mindestens einen Erstkomponente EK gegebenenfalls sehr lang. Daher werden die Arbeitsprogramme AP, die der mindestens einen Erstkomponente EK zugeordnet sind, gegenüber den Arbeitsprogrammen AP, die der mindestens einen weiteren Komponente WK zugeordnet sind, bevorzugt abgearbeitet. Dies kann dadurch geschehen, dass die Arbeitsprogramme AP, die der mindestens einen Erstkomponenten EK zugeordnet sind, vor den Arbeitsprogrammen AP abgearbeitet werden, die den weiteren Komponenten WK zugeordnet sind. Ferner werden die Arbeitsprogramme AP die der mindestens einen Erstkomponente EK zugeordnet sind, mit einer ersten Lastpriorität abgearbeitet, die höher ist als eine zweite Lastpriorität, mit der die Arbeitsprogramme AP abgearbeitet werden, die den weiteren Komponenten WK zugeordnet sind. Dadurch erhalten die Arbeitsprogramme AP, die der mindestens einen Erstkomponente EK zugeordnet sind, für deren Abarbeitung einen größeren Anteil der insgesamt zur Verfügung stehenden Rechenressourcen. Dadurch ist die mindestens eine Erstkomponente EK besonders früh nach dem Beginn der Startphase des Systems nutzbar.

Die zweite Lastpriorität ist bevorzugt so niedrig, dass die Arbeitsprogramme AP, die den weiteren Komponenten WK zugeordnet sind, im Wesentlichen nur dann abgearbeitet werden, wenn die aktuelle Rechenlast RL kleiner ist als 100 %. Dies hat den Vorteil, dass das Abarbeiten der Arbeitsprogramme AP, die den weiteren Komponenten WK zugeordnet sind, den mindestens einen Prozessor in der Steuereinheit STE während der Startphase des Systems nicht oder nur unwesentlich belastet.

Figur 2 zeigt ein Klassendiagramm. Die vorgegebenen Komponenten K sind jeweils durch eine eigene Software-Klasse repräsentiert. Der Übersichtlichkeit halber sind in Figur 2 nur die Klassen der Radioeinheit R und der MP3-Wiedegabeeinheit MP3 dargestellt. Die Klasse der jeweiligen vorgegebenen Komponente K umfasst beispielsweise eine Startfunktion START und eine Stoppfunktion STOP. Mittels der Startfunktion START und der Stoppfunktion STOP kann die zugehörige vorgegebene Komponente K gestartet beziehungsweise gestoppt werden, das heißt zum Beispiel das Abspielen eines Radioprogramms oder einer MP3-Datei gestartet oder gestoppt werden. Es können jedoch ebenso andere oder weitere Funktionen vorgesehen sein.

Ferner ist ein Hauptprozess MP vorgesehen, der die vorgegebenen Komponenten K verwaltet. Der Hauptprozess MP ermöglicht Benutzereingaben über die Benutzerschnittstelle BS und steuert die vorgegebenen Komponenten K durch Aufrufen von zum Beispiel der Startfunktion START oder der Stoppfunktion STOP. Der Hauptprozess MP arbeitet bevorzugt mit einer hohen Lastpriorität, die beispielsweise gleich der ersten Lastpriorität ist.

Den jeweiligen vorgegebenen Komponenten K sind Arbeitsprogramme AP zugeordnet. Die Arbeitsprogramme AP sind jeweils durch eine eigene Klasse repräsentiert. Diese umfasst eine Abarbeitungsfunktion AF. Durch Ausführen der Abarbeitungsfunktion AF wird das Arbeitsprogramm AP der jeweiligen vorgegebenen Komponente K abgearbeitet.

Ferner ist mindestens ein Hintergrundprozess BP vorgesehen, der mit einer niedrigen Lastpriorität arbeitet, die beispielsweise gleich der zweiten Lastpriorität ist. Bevorzugt ist für jeden in der Steuereinheit STE vorgesehenen Prozessor für die Abarbeitung der Arbeitsprogramme AP ein Hintergrundprozess BP vorgesehen. Der mindestens eine Hintergrundprozess BP verwaltet eine Liste L, in der Arbeitsprogramme AP zur Abarbeitung vorgebbar sind. Der mindestens eine Hintergrundprozess BP arbeitet die in der Liste L vorgegebenen Arbeitsprogramme AP bevorzugt mit der zweiten Lastpriorität ab, indem die Abarbeitungsfunktion AF des jeweiligen Arbeitsprogramms AP aufgerufen wird. Vorzugsweise arbeitet der Hintergrundprozess BP die in der Liste L vorgegebenen Arbeitsprogramme AP sequentiell nacheinander ab. Der mindestens eine Hintergrundprozess BP kann jedoch auch anders ausgebildet sein.

Wird die Startfunktion START einer der mindestens zwei vorgegebenen Komponenten K durch den Hauptprozess MP aufgerufen, zum Beispiel durch eine Anforderung dieser vorgegebenen Komponente K, so wird die Startfunktion START bevorzugt ausgeführt mit der Lastpriorität des Hauptprozesses MP, das heißt bevorzugt mit der ersten Lastpriorität. Sind die für das Nutzen der angeforderten vorgegebenen Komponente K erforderlichen Arbeitsprogramme AP noch nicht durch den Hintergrundprozess BP abgearbeitet worden, dann werden diese bevorzugt abgearbeitet mit der Lastpriorität des Hauptprozesses MP, das heißt mit der ersten Lastpriorität. Dazu führt die Startfunktion START die Abarbeitungsfunktionen AF der der angeforderten vorgegebenen Komponente K zugeordneten Arbeitsprogramme AP aus. Dies hat den Vorteil, dass die angeforderte vorgegebene Komponente K mit nur geringer Verzögerung in Bezug auf einen Zeitpunkt der Anforderung nutzbar ist.

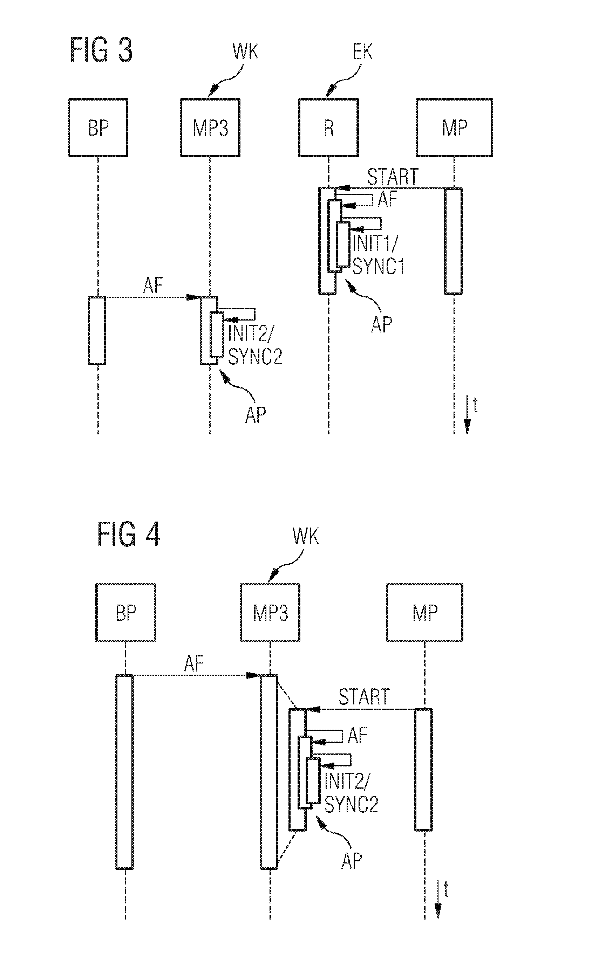

Figur 3 zeigt ein erstes Ablaufdiagramm. Als Erstkomponente EK ist beispielhaft die Radioeinheit R vorgegeben. Als weitere Komponente WK ist beispielhaft die MP3-Wiedergabeeinheit MP3 vorgegeben. Nach dem Beginn der Startphase des Systems wird die Erstkomponente EK bevorzugt durch den Hauptprozess MP durch Ausführen der Startfunktion START gestartet. Jedoch sind zu diesem Zeitpunkt die für die Nutzung der Erstkomponente EK erforderlichen Arbeitsprogramme AP noch nicht abgearbeitet worden. Daher führt die Startfunktion START die jeweilige Abarbeitungsfunktion AF der Arbeitsprogramme AP aus, die der Erstkomponente EK zugeordnet sind.

Beispielsweise sind ein Arbeitsprogramm AP zur Initialisierung INIT1 der Erstkomponente EK und ein Arbeitsprogramm AP zur Synchronisierung SYNC1 der Erstkomponente EK vorgesehen. Diese werden mit der ersten Lastpriorität abgearbeitet. Die Erstkomponente EK ist nutzbar, nachdem die Arbeitsprogramme AP abgearbeitet sind, die der Erstkomponente EK zugeordnet sind.

Die Arbeitsprogramme AP, die der weiteren Komponente WK zugeordnet sind, sind in der Liste L des Hintergrundprozesses BP vorgegeben. Diese Arbeitsprogramme AP umfassen beispielsweise eine Initialisierung INIT2 der weiteren Komponente WK und eine Synchronisierung SYNC2 der weiteren Komponente WK. Der mindestens eine Hintergrundprozess BP führt jeweils die Abarbeitungsfunktion AF der Arbeitsprogramme AP der weiteren Komponente WK aus und arbeitet diese mit der zweiten Lastpriorität ab. Wird die weitere Komponente WK, also hier die MP3-Wiedergabeeinheit MP3, nach dem Abarbeiten der zugehörigen Arbeitsprogramme AP angefordert, das heißt wird die Startfunktion START der weiteren Komponente WK ausgeführt, dann müssen die zugehörigen Arbeitsprogramme AP nicht erneut ausgeführt werden und die weitere Komponente WK ist mit nur geringer zeitlicher Verzögerung in Bezug auf den Zeitpunkt der Anforderung nutzbar.

Figur 4 zeigt ein zweites Ablaufdiagramm. Wird die weitere Komponente WK angefordert während eines der zugehörigen Arbeitsprogramme AP durch den mindestens einen Hintergrundprozess BP abgearbeitet wird, das heißt wird die Startfunktion START der weiteren Komponente WK durch den Hauptprozess MP ausgeführt, dann ist es vorteilhaft, wenn die weitere Abarbeitung der dieser weiteren Komponente WK zugeordneten Arbeitsprogramme AP mit einer dritten Lastpriorität abgearbeitet werden, die höher ist als die zweite Lastpriorität und die bevorzugt gleich der ersten Lastpriorität ist. Dadurch ist die aktuell angeforderte weitere Komponente WK mit nur geringer zeitlicher Verzögerung in Bezug auf den Zeitpunkt der Anforderung nutzbar. Dies kann beispielsweise dadurch erreicht werden, dass die höhere dritte Lastpriorität dem Hintergrundprozess BP und somit auch den für die angeforderte vorgegebene Komponente K abzuarbeitenden Arbeitsprogramme AP zugewiesen wird.

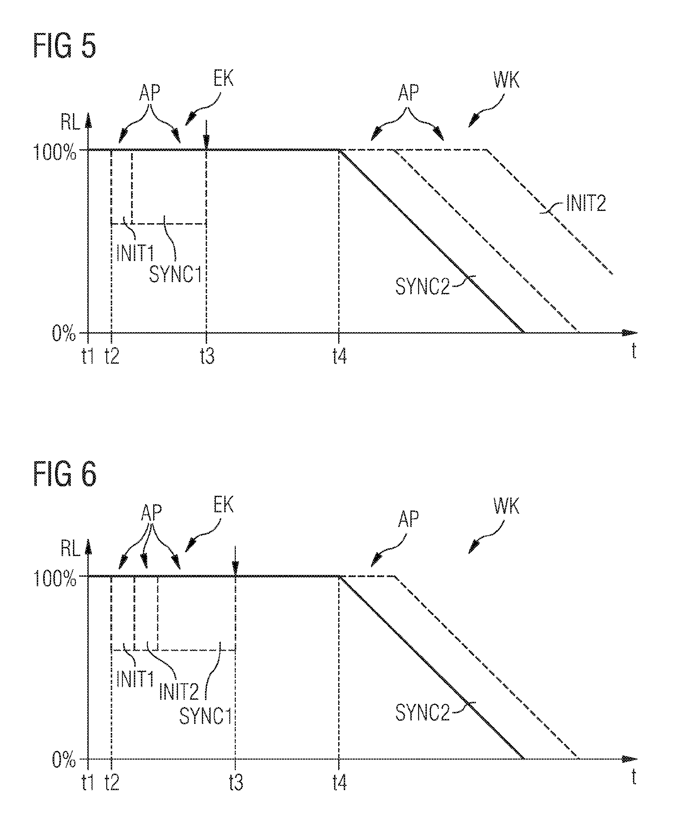

Figuren 5 und 6 zeigen zwei alternative Rechenlast-ZeitDiagramme, in denen unterschiedliche Reihenfolgen der Abarbeitung von Arbeitsprogrammen AP dargestellt sind.

Zu einem ersten Zeitpunkt t1 wird das System gestartet. Der erste Zeitpunkt t1 repräsentiert den Beginn der Startphase des Systems. Zu einem zweiten Zeitpunkt t2 beginnt die Abarbeitung der Arbeitsprogramme AP, die der Erstkomponente EK zugeordnet sind. Dies sind insbesondere die Initialisierung INIT1 der Erstkomponente EK und die Synchronisierung SYNC1 der Erstkomponente EK. Es können jedoch auch andere oder weitere Arbeitsprogramme AP vorgesehen sein, die der Erstkomponente EK zugeordnet sind. Zu einem dritten Zeitpunkt t3 ist die Abarbeitung der Arbeitsprogramme AP der Erstkomponente EK abgeschlossen und die Erstkomponente EK ist nutzbar. Die Startphase des Systems erstreckt sich im Wesentlichen bis zu einem vierten Zeitpunkt t4. Ab dem vierten Zeitpunkt t4 sinkt die Rechenlast RL auf unter 100 % ohne Berücksichtigung der Rechenressourcen, die die Arbeitsprogramme, die den weiteren Komponenten WK zugeordnet sind, für ihre Abarbeitung in Anspruch nehmen. Do stehen Rechenressourcen für das Abarbeiten der Arbeitsprogramme AP zur Verfügung, die den weiteren Komponenten WK zugeordnet sind. Das Abarbeiten der Arbeitsprogramme AP, die den weiteren Komponenten WK zugeordnet sind, beginnt also im Wesentlichen ab dem vierten Zeitpunkt t4. Insbesondere erfolgt die Initialisierung INIT2 der weiteren Komponenten WK und die Synchronisierung SYNC2 der weiteren Komponenten WK. Die Reihenfolge der Initialisierung oder der Synchronisierung kann auch anders vorgegeben sein.

In Figur 6 wird zwischen dem zweiten Zeitpunkt t2 und dem dritten Zeitpunkt t3 zusätzlich zu der Initialisierung INIT1 der Erstkomponenten EK und der Synchronisierung SYNC1 der Erstkomponenten EK zusätzlich auch die Initialisierung INIT2 der weiteren Komponenten WK durchgeführt, indem die zugehörigen Arbeitsprogramme AP abgearbeitet werden. Die Initialisierung INIT1 der Erstkomponente EK und die Initialisierung I-NIT2 der weiteren Komponenten WK betrifft hier insbesondere das Überprüfen des physikalischen Vorhandenseins oder der Verfügbarkeit der jeweiligen vorgegebenen Komponente K in dem System. Es können jedoch auch andere Arbeitsprogramme AP vorgegeben sein, die den weiteren Komponenten WK zugeordnet sind und die in zeitlichem Zusammenhang mit den Arbeitsprogrammen AP abgearbeitet werden, die der Erstkomponente EK zugeordnet sind. Jedoch werden weitere Arbeitsprogramme AP, die den weiteren Komponenten WK zugeordnet sind, in diesem Beispiel die Synchronisierung SYNC2 der weiteren Komponenten WK, bevorzugt nach dem vierten Zeitpunkt t4 mit der niedrigen zweiten Lastpriorität abgearbeitet. Ferner wird bevorzugt auch das Laden der Konfiguration der jeweiligen weiteren Komponente WK, das Teil der Initialisierung sein kann, als Arbeitsprogramm AP nach dem vierten Zeitpunkt t4 mit der niedrigen zweiten Lastpriorität abgearbeitet.

Bevorzugt ist eine Reihenfolge der Abarbeitung der Arbeitprogramme AP, die den weiteren Komponenten WK zugeordnet sind, vorgegeben, zum Beispiel durch Vorgabe einer Abarbeitungspriorität für jedes Arbeitsprogramm AP. Die Reihenfolge der Abarbeitung ist beispielsweise durch die Reihenfolge der Arbeitsprogramme in der Liste L des Hintergrundprozesses BP vorgebbar. Die Abarbeitungspriorität ist bevorzugt abhängig von einer tatsächlichen oder erwarteten Häufigkeit der Anforderung der jeweils zugehörigen vorgegebenen Komponente K vorgegeben. Die Abarbeitungspriorität kann fest vorgegeben sein oder abhängig sein von einer Vorgabe des Nutzers oder abhängig von dem Nutzungsverhalten vorgebbar sein. Es kann auch jedem Arbeitsprogramm AP eine Kennung zugeordnet sein, anhand derer die Abarbeitungspriorisierung durchgeführt wird, zum Beispiel dadurch, dass Arbeitsprogramme AP mit einer vorgegebenen ersten Kennung vor Arbeitsprogrammen AP mit einer vorgegebenen zweiten Kennung abgearbeitet werden sollen. Es können auch mehr als die erste und die zweite Kennung vorgegeben sein.

Für eine Laufzeitabschätzung wird eine Anzahl m von vorgegebenen Komponenten K und eine Anzahl n_i von Arbeitsschritten für die Initialisierung und Synchronisierung der i-ten vorgegebenen Komponente K angenommen. Vereinfachend wird ferner angenommen, dass die Anzahl n_i von Arbeitsschritten für alle vorgegebenen Komponenten K gleich groß und gleich der Anzahl n von Arbeitsschritten ist. Ferner wird angenommen, dass in Anlehnung an die in Figur 6 dargestellte Reihenfolge der Abarbeitung der Arbeitsprogramme AP die Initialisierung INIT1 der Erstkomponente EK und die Initialisierung INIT2 der weiteren Komponenten WK nur einen Arbeitsschritt umfasst, zum Beispiel für das Überprüfen des physikalischen Vorhandenseins oder der Verfügbarkeit der jeweiligen vorgegebenen Komponente K. Die Synchronisierung SYNC1 der Erstkomponente EK und die Synchronisierung SYNC2 der weiteren Komponenten WK umfassen dann jeweils 99 Arbeitsschritte. Die Gesamtlaufzeit ist die Summe von Θ(n) über die Anzahl m von vorgegebenen Komponenten K, das heißt m·Θ(n), wobei Θ(n) eine Komplexitätsklasse für die Anzahl n von Arbeitsschritten repräsentiert.

Wird gemäß Figur 6 die Initialisierung aller vorgegebenen Komponenten K zwischen dem zweiten und dem dritten Zeitpunkt t2, t3 durchgeführt und wird ferner zwischen dem zweiten und dem dritten Zeitpunkt t2, t3 die Synchronisierung SYNC1 der Erstkomponente EK durchgeführt, dann ergibt sich für die Zeitdauer zwischen dem zweiten und dem dritten Zeitpunkt t2, t3 als asymptotische Laufzeitabschätzung m·Θ(1)+Θ(n). Beispielsweise beträgt die Anzahl m von vorgegebenen Komponenten K in dem System zehn. Ferner beträgt ein Zeitbedarf für das Abarbeiten eines Arbeitsschritts beispielsweise drei Millisekunden. Würden alle zehn vorgegebenen Komponenten K zwischen dem zweiten und dem dritten Zeitpunkt t2, t3 initialisiert und synchronisiert werden, dann würde dies m·n·3 Millisekunden, das heißt 3 Sekunden dauern. Die Startphase des Systems dauert daher sehr lang. Durch die Bevorzugung der Erstkomponente EK gegenüber den weiteren Komponenten WK beträgt die Zeitdauer zwischen dem zweiten und dem dritten Zeitpunkt t2, t3 nur m·3 Millisekunden + (n-1)·3 Millisekunden, d.h. 327 Millisekunden. Die Startphase des Systems ist somit kürzer.

## Patentansprüche

1. Verfahren, bei dem
- von mindestens zwei vorgegebenen Komponenten (K) eines Systems mindestens eine als eine Erstkomponente (EK) vorgegeben ist, die nach dem Beginn einer Startphase des Systems als erstes genutzt werden soll, und mindestens eine als weitere Komponente (WK) vorgegeben ist,
- mit einer ersten Lastpriorität mindestens ein Arbeitsprogramm (AP) abgearbeitet wird, das der mindestens einen Erstkomponente (EK) zugeordnet ist und das abgearbeitet sein muss, bevor die mindestens eine Erstkomponente (EK) nutzbar ist,
- mit einer zweiten Lastpriorität, die niedriger ist als die erste Lastpriorität, mindestens ein Arbeitsprogramm (AP) abgearbeitet wird, das der mindestens einen weiteren Komponente (WK) zugeordnet ist und das abgearbeitet sein muss, bevor die mindestens eine weitere Komponente (WK) nutzbar ist, und
- das mindestens eine Arbeitsprogramm (AP), das der mindestens einen Erstkomponente (EK) zugeordnet ist, vor dem mindestens einen Arbeitsprogramm (AP) abgearbeitet wird, das der mindestens einen weiteren Komponente (WK) zugeordnet ist.

2. Verfahren nach Anspruch 1, bei dem die mindestens eine weitere Komponente (WK) anforderbar ist und bei einer Anforderung das mindestens eine Arbeitsprogramm (AP), das der angeforderten Komponente zugeordnet ist, vor den Arbeitsprogrammen (AP) abgearbeitet wird, die den gegebenenfalls verbleibenden weiteren Komponenten (WK) zugeordnet sind, mit einer dritten Lastpriorität, die höher ist als die zweite Lastpriorität, wenn das mindestens eine Arbeitsprogramm (AP), das der angeforderten Komponente zugeordnet ist, nicht bereits abgearbeitet wurde.

3. Verfahren nach einem der vorstehenden Ansprüche, bei dem die mindestens eine weitere Komponente (WK) anforderbar ist und bei einer Anforderung die zweite Lastpriorität des mindestens einen Arbeitsprogramms (AP), das der angeforderten Komponente zugeordnet ist, auf die dritte Lastpriorität erhöht wird, wenn dieses mindestens eine Arbeitsprogramm (AP) aktuell abgearbeitet wird.

4. Verfahren nach einem der vorstehenden Ansprüche 2 oder 3, bei dem den Arbeitsprogrammen (AP), die der mindestens einen weiteren Komponente (WK) zugeordnet sind, jeweils eine Abarbeitungspriorität vorgebbar ist, die abhängig ist von einer tatsächlichen oder erwarteten Häufigkeit der Anforderung der jeweiligen weiteren Komponente (WK).

5. Verfahren nach einem der vorstehenden Ansprüche, bei dem Arbeitsprogramme (AP) ein Laden einer Konfiguration der jeweiligen vorgegeben Komponente (K) und/oder ein Überprüfen des Vorhandenseins oder der Verfügbarkeit und/oder eines Zustands der jeweiligen vorgegebenen Komponente (K) umfassen.

6. Vorrichtung, bei der von mindestens zwei vorgegebenen Komponenten (K) eines Systems mindestens eine als eine Erstkomponente (EK) vorgegeben ist, die nach dem Beginn einer Startphase des Systems als erstes genutzt werden soll, und mindestens eine als weitere Komponente (WK) vorgegeben ist, und die ausgebildet ist
- zum Abarbeiten mindestens eines Arbeitsprogramms (AP) mit einer ersten Lastpriorität, das der mindestens einen Erstkomponente (EK) zugeordnet ist und das abgearbeitet sein muss, bevor die mindestens eine Erstkomponente (EK) nutzbar ist,
- zum Abarbeiten mindestens eines Arbeitsprogramms (AP), das der mindestens einen weiteren Komponente (WK) zugeordnet ist und das abgearbeitet sein muss, bevor die mindestens eine weitere Komponente (WK) nutzbar ist, mit einer zweiten Lastpriorität, die niedriger ist als die erste Lastpriorität, und
- zum Abarbeiten des mindestens einen Arbeitsprogramms (AP), das der mindestens einen Erstkomponente (EK) zugeordnet ist, vor dem mindestens einen Arbeitsprogramm (AP), das der mindestens einen weiteren Komponente (WK) zugeordnet ist.

7. System, das mindestens zwei vorgegebene Komponenten (K) umfasst und von den mindestens zwei vorgegebenen Komponenten (K) mindestens eine als eine Erstkomponente (EK) vorgegeben ist, die nach dem Beginn einer Startphase des Systems als erstes genutzt werden soll, und mindestens eine als weitere Komponente (WK) vorgegeben ist, und das ausgebildet ist
- zum Abarbeiten mindestens eines Arbeitsprogramms (AP) mit einer ersten Lastpriorität, das der mindestens einen Erstkomponente (EK) zugeordnet ist und das abgearbeitet sein muss, bevor die mindestens eine Erstkomponente (EK) nutzbar ist,
- zum Abarbeiten mindestens eines Arbeitsprogramms (AP), das der mindestens einen weiteren Komponente (WK) zugeordnet ist und das abgearbeitet sein muss, bevor die mindestens eine weitere Komponente (WK) nutzbar ist, mit einer zweiten Lastpriorität, die niedriger ist als die erste Lastpriorität, und
- zum Abarbeiten des mindestens einen Arbeitsprogramms (AP), das der mindestens einen Erstkomponente (EK) zugeordnet ist, vor dem mindestens einen Arbeitsprogramm (AP), das der mindestens einen weiteren Komponente (WK) zugeordnet ist.
